# EUROPEAN PATENT SPECIFICATION

(11) **EP 2 520 446 B1**
(45) Date of publication and mention of the grant of the patent: **29.01.2014**
(21) Application number: 12166189.6
(22) Date of filing: 30.04.2012
(51) Int. Cl.: B60C 1/00, B60C 5/14, C09D 127/12, C09D 177/00, C08L 21/00

(54) **Tire with multi-layered barrier layer innerliner**
Reifen mit mehrschichtigen Sperrschichtinnenmantel
Pneu avec garniture de couche barrière multicouche

(30) Priority: 02.05.2011 US 201161481340 P
(43) Date of publication of application: 07.11.2012
(73) Proprietor: The Goodyear Tire & Rubber Company, Akron, OH 44316-0001 (US)
(72) Inventor: Incavo, Joseph Alan, Hudson, OH Ohio 44236 (US)
(74) Representative: Kutsch, Bernd

(56) References cited:
- EP-A1- 2 070 727
- EP-A1- 2 258 770
- JP-A- 7 040 702
- JP-A- 9 165 469

## Description

### Field of the Invention

The present invention is generally directed to a tire and more specifically to a pneumatic tire having a pre-formed multi-layered air barrier layer innerliner.

### Background of the Invention

Conventionally, barrier layers, usually in a form of innerliners, for pneumatic rubber tires comprise butyl or halogenated butyl rubber (e.g. halobutyl rubber) layers which have greater resistance to air or oxygen permeability than other tire components. Such barrier layers, or innerliners, are provided to inhibit the loss of air or oxygen from the pneumatic tire cavity through the barrier layer into the tire carcass which promotes retention of air, including retention of air pressure, within the pneumatic tire cavity. In order to provide a suitable degree of air or oxygen impermeability, such innerliner layer needs to be sufficiently thick so that it adds significant weight to the tire. Further, an additional rubber layer, sometimes referred to as a tie layer, with low hysteresis loss, added in a manner that it is sandwiched between the barrier layer and the tire carcass.

The thickness of the butyl rubber (e.g. halobutyl rubber) adds significantly to the weight of the tire. Accordingly, alternate thinner materials with low air or oxygen permeability are desired, particularly in a form of thin films, for use as such barrier layers. Various candidates which are relatively impermeable to air or oxygen have heretofore been proposed, including, for example, polyvinylidene chloride, nylon, and polyester. For example, see US-A- 5,040,583 and US-A- 4,928,741. Composites containing such films have been proposed such as, for example, at least one layer of a thin film of such non-elastomeric barrier material sandwiched and bonded between two elastomer layers of elastomeric compositions.

Thin films of alloys with a resistance to air and/or oxygen permeability have also been proposed for a tire innerliner layer comprising a mixture of thermoplastic resin, elastomer and, optionally, a binder resin to enhance the compatibility between the thermoplastic resins and elastomers.

Advantageously, films of such low air/oxygen permeable alloys can be significantly thinner than their conventional butyl rubber-based counterpart tire innerliners and can therefore provide a substantial tire weight savings.

For this invention, however, is desired to provide a tire innerliner as a barrier to air and/or oxygen as a pre-formed multi-layered composite of a layered non-elastomeric film (e.g. nylon and/or polyester film), which does not contain an alloy of elastomer, bonded to at least one elastomeric composition layer together with an RFL based adhesive positioned between and in contact with said non-elastomeric film or layer of elastomeric composition of said multi-layered composite and a sulfur vulcanizable diene-based elastomer rubber of the tire carcass to promote adhering said multi-layered composite to said tire carcass.

### Summary and Practice of the Invention

The invention relates to a tire in accordance with claim 1.

Dependent claims refer to preferred embodiments of the invention.

In accordance with a preferred embodiment of the invention, a tire is provided which includes an assembly comprising an outer circumferential tire tread, supporting a fabric reinforced rubber carcass and a pre-formed tire innerliner, (pre-formed in a sense of being formed or fabricated prior to application to an incurred tire component assembly), where said pre-formed innerliner comprises a multi-layered composite which promotes air impermeability together with an RFL adhesive layer positioned between said multi-layered composite and said tire carcass,
wherein said multi-layered composite comprises:
(A) a film of nylon or polyethylene terephthalate polyester bonded to a layer of elastomer composition, which may be a sulfur vulcanizable rubber composition, or
(B) a film of nylon or polyethylene terephthalate polyester sandwiched between two layers of an elastomer composition, which may be a sulfur curable rubber composition, elastomer based rubber composition, or
(C) a layer of elastomer composition, which may be a sulfur vulcanizable rubber composition, sandwiched between two films of nylon or polyethylene terephthalate polyester, or
(D) a layer of elastomer composition, which may be a sulfur curable rubber composition, sandwiched between a film of nylon and/or a film of polyethylene terephthalate polyester;
wherein said RFL adhesive comprises a resorcinol-formaldehyde resin/styrene-butadiene vinylpyridine latex or a blend thereof with a styrene-butadiene rubber latex, and is thereby in contact with an sulfur curable elastomer composition of said tire carcass and said nylon film, polyethylene terephthalate polyester or elastomer composition, which may be a sulfur vulcanizable rubber composition, of said multi-layered composite.

In practice, said RFL adhesive is preferably a well known rescorcinol-formaldehyde resin/butadiene-styrene-vinyl pyridine terpolymer latex, or a blend thereof with a butadiene/styrene rubber latex, used in the tire industry for application to fabrics, fibers and textile cords for aiding in their adherence to rubber components (for example, see US-A- 4,356,219) although not understood as being applied to the multi-layered composite of this invention which is considered herein to be a significant departure from past practice.

In further accordance with this invention, said tire is preferably provided as a sulfur vulcanized composite vulcanized under conditions of elevated temperature and pressure.

In one preferred embodiment, said nylon film and polyethylene terephthate polyester film do not contain a dispersion of (e.g. are exclusive of) elastomer such as example, sulfur vulcanizable, or sulfur vulcanized, elastomer.

In practice, said innerliner barrier composite is preferably a pre-formed composite and the pre-formed composite built into the tire to form the uncured tire assembly of rubber components after which the tire assembly is vulcanized under conditions of elevated temperature and pressure in a suitable tire mold to form a tire comprised of integral components.

A significant aspect of the preferred embodiments of the invention is the inclusion of the RFL adhesive positioned between and in contact with the surface of a sulfur vulcanizable elastomer based rubber composition of said tire carcass and:
(A) a surface of said nylon or polyethylene terephthalate polyester film of said multi-layered composite, or
(B) a surface of said rubber composition layer of said multi-layered composite.

This configuration of the pre-formed multi-layered composite is considered to be significant in a sense of enabling the composite to have suitable flexibility and elasticity for tire manufacturing processes and tire service under tire operating conditions while also providing a suitable barrier for air and/or oxygen.

Representative of sulfur vulcanizable elastomers of said tire carcass to which said RFL adhesive is in contact may comprise, for example, cis 1,4-polyisoprene, cis 1,4-polybutdiene and styrene/butadiene copolymer rubbers.

### Brief Description of the Drawings

The figures contained in the accompanying drawings, which are incorporated in and constitute a part of this specification, are presented to illustrate several embodiments of the invention.

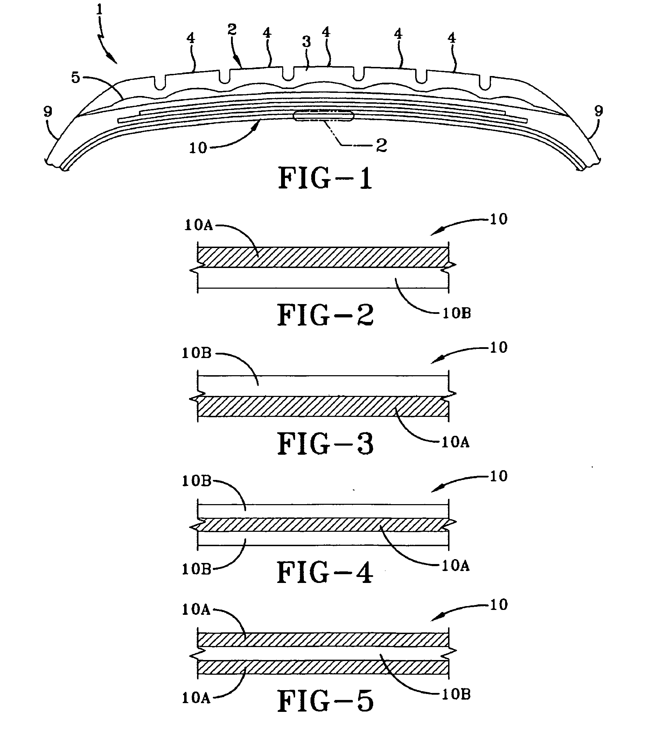

FIG 1 is a cross-sectional view of a portion of pneumatic tire with an innerliner layer. FIGS. 2, 3, 4 and 5 are enlarged partial cross-sectional views of the pneumatic tire of FIG. 1 taken along line 2-2 illustrating the tire innerliner layer as various multi-layered composites.

### The Drawings

FIG 1 depicts a section of a pneumatic tire 1 comprising a tread 2 preferably of a cap/base construction comprising an outer tread cap rubber layer 3 with running surface 4 and an underlying tread base rubber layer 5, tread reinforcing belts and supporting carcass with an inner vulcanizable elastomer-containing rubber layer, sidewalls 9 and an innerliner, or a barrier layer 10, as the innermost layer of the tire which is designed to inhibit the passage, or permeation, of air and oxygen through the barrier layer to promote air retention within the pneumatic tire cavity. The barrier layer 10, as is a conventional practice, does not contain an RFL adhesive coating.

FIG 2 depicts an enlarged portion of the innerliner layer 10 as a composite of a thin nylon or polyethylene terephthalate film air/oxygen barrier layer 10A bonded to an elastomer layer 10B, which may be a sulfur vulcanizable rubber composition . The innerliner layer composite 10 has an RFL coating on the surface of the barrier film 10A to bond the barrier film 10A, and thereby the innerliner layer composite 10 to the surface of the tire sulfur vulcanizable elastomer based rubber composition layer of the tire carcass.

FIG 3 depicts an enlarged portion of the innerliner layer 10 as a composite of a thin nylon or polyethylene terephthalate film air/oxygen barrier layer 10A bonded to an elastomer layer 10B, which may be a sulfur vulcanizable rubber layer. The innerliner layer composite 10 has an RFL coating on the surface of the elastomer layer 10B to bond the elastomer layer 10B, and thereby the innerliner layer composite 10 to the surface of the tire sulfur vulcanizable elastomer based rubber composition layer of the tire carcass.

FIG 4 depicts an enlarged portion of the innerliner layer 10 as a composite of a thin nylon or polyethylene terephthalate film air/oxygen barrier layer 10A bonded to and sandwiched between two elastomer layers 10B, which may be sulfur vulcanizable rubber layers. The innerliner layer composite 10 has an RFL coating on the surface of an elastomer layer 10B to bond the elastomer layer 10B, and thereby the innerliner layer composite 10 to the surface of the tire sulfur vulcanizable elastomer based rubber composition layer of the tire carcass.

FIG 5 depicts an enlarged portion of the innerliner layer 10 as a composite of an elastomer layer 10B, which may be a sulfur vulcanizable rubber layer, bonded to and sandwiched between two thin nylon or polyethylene terephthalate film air/oxygen barrier layers 10A. The innerliner layer composite 10 has an RFL coating on the surface of a barrier film 10A to bond the barrier film 10A, and thereby the innerliner layer composite 10 to the surface of the tire sulfur, vulcanizable elastomer based rubber composition layer of the tire carcass.

Exemplary of the nylon film layer is, for example, nylon 6 or nylon 66, particularly nylon 6.

Polyvinylidinechloride is not desired because to it is unnecessarily subject to degradation in the presence of moisture for the innerliner barrier, and thereby the innerliner composite, of this invention as well as other polymeric films such as polyethylene and films of other polyolefins which have inadequate air impermeability as well as polyvinylchloride based films.

The thin polymeric film (nylon or polyethylene terephthalate polyester) for the barrier layer may have a film thickness, for example, from 25 microns to 200 microns. Alternatively, its thickness may range from 50 microns to 150 microns.

The aforesaid thin polymeric film for the barrier layer may have an oxygen permeability, for example, of less than 20x10⁻¹² cc-cm/cm²·sec·cmHg. Desirably, the aforesaid polymeric film for the barrier layer may also have an elongation, for example, of at least 200 percent at 23°C. As such, it is intended that, when used as the barrier layer of the tire, the polymeric film is not intended to break during the tire shaping process.

For the bonding of the innerliner, or barrier layer, composite to the tire carcass, the RFL adhesive is desired instead of other adhesive materials such as, for example, rosin-based resins; terpene-based resins; petroleum resins; cumarin-indene resins; styrene based resin other than said RFL adhesive; alkylphenol resins; a polyester polyol/isocyanate-type resins; an acrylic acid ester copolymer/organic peroxide-type resins; and reinforced polyurethane adhesive (RPU) resins.

The RFL adhesive may be applied to the innerliner composite by various methods including, for example, as spray coating, dip coating, or extrusion coating. The thickness of the RFL adhesive coating may be, for example, within the range from 2.5 microns to 250 microns.

Where the innermost surface of the barrier layer film (10A) is exposed to the inner cavity of the tire, such as in FIG 3 and in FIG 5, its exposed surface may also include the RFL coating as a thin protective layer to, for example, promote scratch resistance for the innerliner composite.

The rubber compositions for the rubber tire carcass layer and the rubber layer for the innerliner composite can contain conventional rubber tire additives to provide a desired rubber property as would be applied by one having skill in the appropriate art. Such known and commonly used additive materials may include, for example, sulfur cure activators, retarders and accelerators, rubber processing oils, resins including tackifying resins, plasticizers, fatty acids, zinc oxide, waxes, antidegradant, antiozonants, and peptizing agents.

The uncured tire assembly can be molded and sulfur cured in a suitable tire mold at an elevated temperature and pressure conditions as would be appreciated and known to those having skill in such art.

## Claims

1. A tire comprising an outer circumferential tire tread (2), a carcass comprising a sulfur vulcanizable rubber composition and a tire innerliner (10), wherein the innerliner (10) comprises a multi-layered composite (10A, 10B) comprising at least one of:
(A) a film (10A) of nylon or polyethylene terephthalate polyester bonded to a layer of an elastomeric composition (10B), or
(B) a film (10A) of nylon or of polyethylene terephthalate polyester sandwiched between two layers (10B) of an elastomeric composition, or
(C) a layer (10A) of an elastomeric composition sandwiched between two films (10B) of nylon or of polyethylene terephthalate polyester, or
(D) a layer (10B) of an elastomeric composition sandwiched between a film (10A) of nylon and a film of polyethylene terephthalate polyester;
and wherein a RFL adhesive layer is positioned between the multi-layered composite (10A, 10B) and the tire carcass, the RFL adhesive comprising a resorcinol-formaldehyde resin/styrene-butadiene-vinylpyridine latex or a blend thereof with a styrene-butadiene rubber latex.

2. The tire of claim 1 wherein the RFL adhesive layer is in contact with the sulfur vulcanizable rubber composition of the carcass.

3. The tire of claim 1 or 2 wherein the RFL adhesive layer is in contact with the film of nylon, the film of polyethylene terephthalate polyester, or the layer of an elastomeric composition of the multi-layered composite (10A, 10B).

4. The tire of claim 1, 2 or 3 wherein the multi-layered composite (10A, 10B) promotes air impermeability together with the RFL adhesive.

5. The tire of at least one of the previous claims wherein the layer (10B) of an elastomeric composition of the multi-layered composite (10A, 10B) is or comprises a sulfur vulcanizable rubber composition.

6. The tire of at least one of the previous claims wherein the film of nylon and/or the film of polyethylene terephthalate polyester are exclusive of an internal dispersion of elastomer.

7. The tire of at least one of the previous claims wherein the RFL adhesive layer is in contact with the surface of the sulfur vulcanizable rubber layer of the tire carcass and
(A) a surface of the nylon or the polyethylene terephthalate polyester film of the multi-layered composite (10A, 10B); or
(B) a surface of the layer of an elastomeric composition of the multi-layered composite (10A, 10B).

8. The tire of at least one of the previous claims wherein the RFL adhesive layer comprises a blend of a resorcinol-formaldehyde resin/styrene-butadiene-vinylpyridine latex and a styrene-butadiene rubber latex.

9. The tire of at least one of the previous claims wherein the tire (1) has the features of option (A) of claim 1.

10. The tire of at least one of the previous claims wherein the tire (1) has the features of option (B) of claim 1.

11. The tire of at least one of the previous claims wherein the tire (1) has the features of option (C) of claim 1.

12. The tire of at least one of the previous claims wherein the tire (1) has the features of option (D) of claim 1.

13. The tire of at least one of the previous claims wherein the tire (1) is a sulfur vulcanized tire.

## Patentansprüche

1. Reifen, umfassend eine äußere umfangsgerichtete Reifenlauffläche (2), eine Karkasse, umfassend eine schwefelvulkanisierbare Kautschukzusammensetzung, und eine Reifeninnenisolierung (10), wobei die Innenisolierung (10) einen mehrschichtigen Verbundwerkstoff (10A, 10B) umfasst, umfassend mindestens eines von:
(A) einer Folie (10A) aus Nylon oder Polyethylenterephthalatpolyester, verbunden mit einer Schicht aus einer Elastomerzusammensetzung (10B), oder
(B) einer Folie (10A) aus Nylon oder aus Polyethylenterephthalatpolyester, die sich sandwichartig zwischen zwei Lagen (10B) aus einer Elastomerzusammensetzung befindet, oder
(C) einer Schicht (10A) aus einer Elastomerzusammensetzung, die sich sandwichartig zwischen zwei Folien (10B) aus Nylon oder aus Polyethylenterephthalatpolyester befindet, oder
(D) einer Schicht (10B) aus einer Elastomerzusammensetzung, die sich sandwichartig zwischen einer Folie (10A) aus Nylon und einer Folie aus Polyethylenterephthalatpolyester befindet;
und wobei eine RFL-Haftschicht zwischen dem mehrschichtigen Verbundwerkstoff (10A, 10B) und der Reifenkarkasse positioniert ist, wobei das RFL-Haftmittel einen Resorcinol-Formaldehydharz-/Styrol-Butadien-Vinylpyridinlatex oder eine Mischung davon mit einem Styrol-Butadien-Kautschuklatex umfasst.

2. Reifen nach Anspruch 1, wobei die RFL-Haftschicht mit der schwefelvulkanisierbaren Kautschukzusammensetzung der Karkasse in Kontakt ist.

3. Reifen nach Anspruch 1 oder 2, wobei die RFL-Haftschicht mit der Folie aus Nylon, der Folie aus Polyethylenterephthalatpolyester oder der Schicht aus einer Elastomerzusammensetzung des mehrschichtigen Verbundwerkstoffs (10A, 10B) in Kontakt ist.

4. Reifen nach Anspruch 1, 2 oder 3, wobei der mehrschichtige Verbundwerkstoff (10A, 10B) zusammen mit dem RFL-Haftmittel Luftundurchlässigkeit fördert.

5. Reifen nach mindestens einem der vorgenannten Ansprüche, wobei die Schicht (10B) aus einer Elastomerzusammensetzung des mehrschichtigen Verbundwerkstoffs (10A, 10B) eine schwefelvulkanisierte Kautschukzusammensetzung ist oder umfasst.

6. Reifen nach mindestens einem der vorgenannten Ansprüche, wobei die Folie aus Nylon und/oder die Folie aus Polyethylenterephthalatpolyester unter Ausschluss einer inneren Dispersion von Elastomer sind.

7. Reifen nach mindestens einem der vorgenannten Ansprüche, wobei die RFL-Haftschicht in Kontakt ist mit der Oberfläche der schwefelvulkanisierbaren Kautschukschicht der Reifenkarkasse und
(A) einer Oberfläche der Nylon- oder der Polyethylenterephthalatpolyesterfolie des mehrschichtigen Verbundwerkstoffs (10A, 10B); oder
(B) einer Oberfläche der Schicht aus einer Elastomerzusammensetzung des mehrschichtigen Verbundwerkstoffs (10A, 10B).

8. Reifen nach mindestens einem der vorgenannten Ansprüche, wobei die RFL-Haftschicht eine Mischung aus einem Resorcinol-Formaldehydharz-/Styrol-Butadien-Vinylpyridinlatex und einem Styrol-Butadien-Kautschuklatex umfasst.

9. Reifen nach mindestens einem der vorgenannten Ansprüche, wobei der Reifen (1) die Merkmale von Option (A) von Anspruch 1 aufweist.

10. Reifen nach mindestens einem der vorgenannten Ansprüche, wobei der Reifen (1) die Merkmale von Option (B) von Anspruch 1 aufweist.

11. Reifen nach mindestens einem der vorgenannten Ansprüche, wobei der Reifen (1) die Merkmale von Option (C) von Anspruch 1 aufweist.

12. Reifen nach mindestens einem der vorgenannten Ansprüche, wobei der Reifen (1) die Merkmale von Option (D) von Anspruch 1 aufweist.

13. Reifen nach mindestens einem der vorgenannten Ansprüche, wobei der Reifen (1) ein schwefelvulkanisierter Reifen ist.

## Revendications

1. Bandage pneumatique comprenant une bande de roulement circonférentielle externe de bandage pneumatique (2), une carcasse comprenant une composition de caoutchouc vulcanisable au soufre et un calandrage intérieur de bandage pneumatique (10), le calandrage intérieur (10) comprenant un composite multicouche (10A, 10B) comprenant au moins un membre du groupe comprenant :
(A) un film (10A) de nylon ou de polyester de polyéthylènetéréphtalate lié par collage à une couche d'une composition élastomère (10B) ; ou
(B) un film (10A) de nylon ou de polyester de polyéthylènetéréphtalate intercalé entre deux couches (10B) d'une composition élastomère ; ou
(C) une couche (10A) d'une composition élastomère intercalée entre deux films (10B) de nylon ou de polyester de polyéthylènetéréphtalate ; ou
(D) une couche (10B) d'une composition élastomère intercalée entre un film (10A) de nylon et un film de polyester de polyéthylènetéréphtalate ;
et dans lequel une couche d'adhésif RFL est disposée entre le composite multicouche (10A, 10B) et la carcasse du bandage pneumatique, l'adhésif RFL comprenant un latex de résine de résorcinol-formaldéhyde/styrène-butadiène-vinylpyridine ou un mélange de ce dernier avec un latex de caoutchouc de styrène-butadiène.

2. Bandage pneumatique selon la revendication 1, dans lequel la couche d'adhésif RFL est mise en contact avec la composition de la carcasse à base de caoutchouc vulcanisable au soufre.

3. Bandage pneumatique selon la revendication 1 ou 2, dans lequel la couche d'adhésif RFL est mise en contact avec le film de nylon, le film de polyester de polyéthylènetéréphtalate ou la couche d'une composition élastomère du composite multicouche (10A, 10B).

4. Bandage pneumatique selon la revendication 1, 2 ou 3, dans lequel le composite multicouche (10A, 10B) favorise l'imperméabilité à l'air conjointement avec l'adhésif RFL.

5. Bandage pneumatique selon au moins une des revendications précédentes, dans lequel la couche (10B) d'une composition élastomère du composite multicouche (10A, 10B) est ou comprend une composition de caoutchouc vulcanisable au soufre.

6. Bandage pneumatique selon au moins une des revendications précédentes, dans lequel le film de nylon et/ou le film de polyester de polyéthylènetéréphtalate excluent une dispersion interne d'élastomère.

7. Bandage pneumatique selon au moins une des revendications précédentes, dans lequel la couche d'adhésif RFL est mise en contact avec la surface de la couche de caoutchouc vulcanisable au soufre de la carcasse du bandage pneumatique et
(A) une surface du film de nylon ou de polyester de polyéthylènetéréphtalate du composite multicouche (10A, 10B) ; ou
(B) une surface de la couche d'une composition élastomère du composite multicouche (10A, 10B).

8. Bandage pneumatique selon au moins une des revendications précédentes, dans lequel la couche d'adhésif RFL comprend un mélange d'un latex de résine de résorcinol-formaldéhyde/styrène-butadiène-vinylpyridine et d'un latex de caoutchouc de styrène-butadiène.

9. Bandage pneumatique selon au moins une des revendications précédentes, dans lequel le bandage pneumatique (1) possède les caractéristiques de l'option (A) de la revendication 1.

10. Bandage pneumatique selon au moins une des revendications précédentes, dans lequel le bandage pneumatique (1) possède les caractéristiques de l'option (B) de la revendication 1.

11. Bandage pneumatique selon au moins une des revendications précédentes, dans lequel le bandage pneumatique (1) possède les caractéristiques de l'option (C) de la revendication 1.

12. Bandage pneumatique selon au moins une des revendications précédentes, dans lequel le bandage pneumatique (1) possède les caractéristiques de l'option (D) de la revendication 1.

13. Bandage pneumatique selon au moins une des revendications précédentes, dans lequel le bandage pneumatique (1) est un bandage pneumatique vulcanisé au soufre.
